# EUROPEAN PATENT APPLICATION

(11) **EP 4 425 443 A1**
(43) Date of publication of application: **04.09.2024**
(21) Application number: 24158288.1
(22) Date of filing: 19.02.2024
(51) Int. Cl.: G06V 10/778, G06F 18/40, G06V 10/94

(54) **SYSTEMS AND METHODS FOR USER-ASSISTED OBJECT DETECTION**

(30) Priority: 03.03.2023 US 202363449778 P
(71) Applicant: Palantir Technologies Inc., Denver, CO 80202 (US)
(72) Inventor: PATSEKIN, Aleksandr, Denver, 80202 (US); RADFORD, Ben, Denver, 80202 (US); DERWIN, Cameron, Denver, 80202 (US); MARASCO, Daniel, Denver, 80202 (US); WANG, Di, Denver, 80202 (US); LYMPEROPOULOS, Dimitrios, Denver, 80202 (US); KIM, Keun Jae, Denver, 80202 (US); GORACZKO, Michel, Denver, 80202 (US); LEI, Peng, Denver, 80202 (US); SRIKHANTA, Prasanna, Denver, 80202 (US); LALONDE, Rodney, Denver, 80202 (US); SHEN, Tong, Denver, 80202 (US); LI, Xin, Denver, 80202 (US); WU, Yue, Denver, 80202 (US)
(74) Representative: Sayer, Robert David

(57) **Abstract**

In some examples, systems and methods for user-assisted object detection are provided. For example, a method includes: receiving an input image, and performing object detection by a software detector to identify a set of detected objects. The software detector includes a machine-learning model. The method further includes outputting one or more indicators of the set of detected objects. Each detected object in the set of detected objects is associated with a confidence level. The method further includes receiving a user input; identifying a template including an image portion associated with the user input; determining a similarity metric between the template and an object in the set of detected objects; modifying a confidence level of the object based at least in part on the determined similarity metric; and generating an output including an indicator of the object based at least in part on the modified confidence level.

## Description

### CROSS REFERENCE TO RELATED APPLICATIONS

This application claims priority to U.S. Provisional Application No. 63/449,778, entitled "SYSTEMS AND METHODS FOR USER-ASSISTED OBJECT DETECTION," and filed on March 3, 2023

### TECHNICAL FIELD

Certain embodiments of the present disclosure relate to object detection. More particularly, some embodiments of the present disclosure relate to a system using a machine-learning model that takes user input to improve its detection of objects in an image.

### BACKGROUND

Machine-learning models can be trained to detect objects in images. Often the models learn from (e.g., are trained using) a large amount of labeled datasets. However, such models may have poor performance for real-world deployment. For example, the poor performance can be due to limited training data for rare classes (e.g., types of object to be detected), cost and time to label large amounts of data, and/or changes to an environment for which the models are deployed (e.g., different geo-locations, seasonal changes, light changes, etc.).

Hence, it is desirable to improve techniques for object detection in images.

### SUMMARY

Certain embodiments of the present disclosure relate to object detection. More particularly, some embodiments of the present disclosure relate to a system using a machine-learning model that takes user input to improve its detection of objects in an image.

At least some aspects of the present disclosure are directed to a method for user-assisted object detection. The method includes: receiving an input image; performing object detection by a software detector to identify a set of detected objects in the image, the software detector including a machine-learning model; outputting one or more indicators of the set of detected objects, each detected object in the set of detected objects being associated with a confidence level; receiving a user input; identifying a template including an image portion associated with the user input; determining a similarity metric between the template and a detected object in the set of detected objects; modifying a confidence level of the detected object, based at least in part on the determined similarity metric; and generating an output including an indicator of the object, based at least in part on the modified confidence level, wherein the method is performed using one or more processors.

At least some aspects of the present disclosure are directed to a system for user-assisted object detection. The system includes at least one processor and at least one memory storing instructions that, when executed by the at least one processor, causes the system to perform a set of operations. The set of operations includes: receiving an input image; performing object detection by a software detector to identify a set of detected objects, the software detector including a machine-learning model; outputting one or more indicators of the set of detected objects, each detected object in the set of detected objects being associated with a confidence level; receiving a user input; identifying a template including an image portion associated with the user input; determining a similarity metric between the template and a detected object in the set of detected objects; modifying a confidence level of the detected object, based at least in part on the determined similarity metric; and generating an output including an indicator of the object, based at least in part on the modified confidence level.

At least some aspects of the present disclosure are directed to a method for user-assisted object detection. The method includes: receiving an input image; performing object detection, by a detector, to identify a set of detected objects comprising one or more detected objects; outputting one or more indicators of the one or more detected objects, each detected object of the set of detected objects being associated with a confidence level; receiving a user input that indicates a missed object that is not in the set of detected objects; and adding an image portion associated with the user input as a template to a template library; scanning the input image, using the template, to update the set of detected objects; determining one or more similarities between the template and one or more detected objects of the updated set of detected objects; modifying one or more confidence levels of the confidence levels associated with the detected objects of the set of detected objects, based at least in part on the one or more determined similarities; and generating an output including one or more indicators of the one or more modified confidence levels and their respective one or more detected objects in the set of detected objects.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

Figure 1 is an illustrative example of an object detection system or workflow, according to certain embodiments of the present disclosure
Figure 2 is an illustrative example of an object detection system or workflow, according to certain embodiments of the present disclosure.
Figure 3 is a simplified diagram showing a method for user-assisted object detections according to certain embodiments of the present disclosure.
Figure 4 is a simplified diagram showing a method for user-assisted object detections according to certain embodiments of the present disclosure.
Figure 5 is a simplified diagram showing a method for user-assisted object detections according to certain embodiments of the present disclosure.
Figure 6 is a simplified diagram showing a method for user-assisted object detections according to certain embodiments of the present disclosure.
Figure 7 is a simplified diagram showing a method for user-assisted object detections according to certain embodiments of the present disclosure.
Figure 8 illustrates a simplified diagram showing a computing system for user-assisted object detection, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods that use models trained for detecting objects in images, often trained their models from a large amount of labeled datasets. Conventionally trained models often achieve great performance on a standard dataset or benchmark dataset (e.g., standard images for classification tasks, Common Objects in Context (COCO) for object detection tasks, etc.). However, conventional systems and methods often have a gap (e.g., a big gap) between their models evaluating the standard dataset or benchmark dataset and real deployment in the field. For conventional systems and methods, many factors can cause models not to perform well or as expected. For example, the factors can include little data (hard to collect) for rare classes, cost and time to label large amounts of data, deployment environment changes such as different geo-locations, seasonal changes, lighting changes, and/or the like. For conventional systems and methods, models, when deployed in the field (e.g., applied to real-world use-cases or applications), often cannot meet users' needs and expectations.

Various embodiments of the present disclosure can achieve benefits and/or improvements by a computing system. In some embodiments, benefits include improved detection of objects within images, such as based on user-input. In some embodiments, benefits include quickly adapting detection models to new deployment environments (e.g., new geo-locations). In some embodiments, the above-noted benefits may be achieved because object tracking systems provided herein allow a user to interact with a model to correct the model's mistakes and improve the model's performance in real-time, for example, to address the gap in the performance of the model. In some embodiments, the user interactions help to modify confidence levels, which provide improved accuracy for detecting objects of interest. In some embodiments, object tracking systems provided herein use outputs from one or more object detecting models and/or one or more user inputs to generate and/or update a template for an object of interest (e.g., a target of interest). Computer vision based object tracking is a technology to detect and track objects of interest by detecting objects, assigning an identifier (ID) to each object and maintaining their IDs throughout a video or a sequence of images. In some examples, object tracking has been applied in self-driving, retail, and other industries.

At least some embodiments of the present disclosure are directed to object tracking for one or more images, a sequence of images, and/or a video. In certain embodiments, an object tracking system (e.g., an object tracking software, an object tracking platform, etc.) uses a template for object detection. In some embodiments, the object tracking system uses outputs from one or more object detecting models and/or one or more user inputs to generate and/or update a template for an object of interest (e.g., a target of interest). In certain embodiments, a template refers to an image and/or one or more features extracted from the image. For example, the features extracted from the image may include pixel values, shapes, vectors, and/or other elements of an image which can be extracted based on objects of interest to be detected. In some embodiments, a template is associated with an object of interest. In certain embodiments, the image of the template is a portion of a captured image (e.g., a frame, a still image, a sequence of images, a video). In some embodiments, a frame, also referred to as an image frame, is an image in a sequence of images or an image in a video.

In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof. In some embodiments, even worse, users can only consume model output and can't directly provide feedback to the model, but instead, provide feedback in an ad-hoc way to model developers to iterate, such as collecting/labeling more data to retrain the model, tuning model hyper-parameters, etc., which is a very time consuming and highly inefficient process.

According to certain embodiments, the present disclosure includes a new workflow and a mechanism for object detections which allows a user to interact with a model to correct the model's mistakes and improve the model's performance in real-time, for example, to address the gap in the performance of the model. In some embodiments, systems and methods for object detections target several scenarios and provide technology improvements, including but not limited to: boosting existing state of the art detectors' performance (same domain, same base classes that these detectors were trained for); quickly adapting to new deployment environment/geo-locations that the detectors were not trained for; and/or addressing ontology changes especially new object classes that the detectors were not trained for. In certain embodiments, a software detector, also referred to as a detector or an object detector, refers to an ML detector, a DL detector, an ANN detector, a DNN detector, and/or the like.

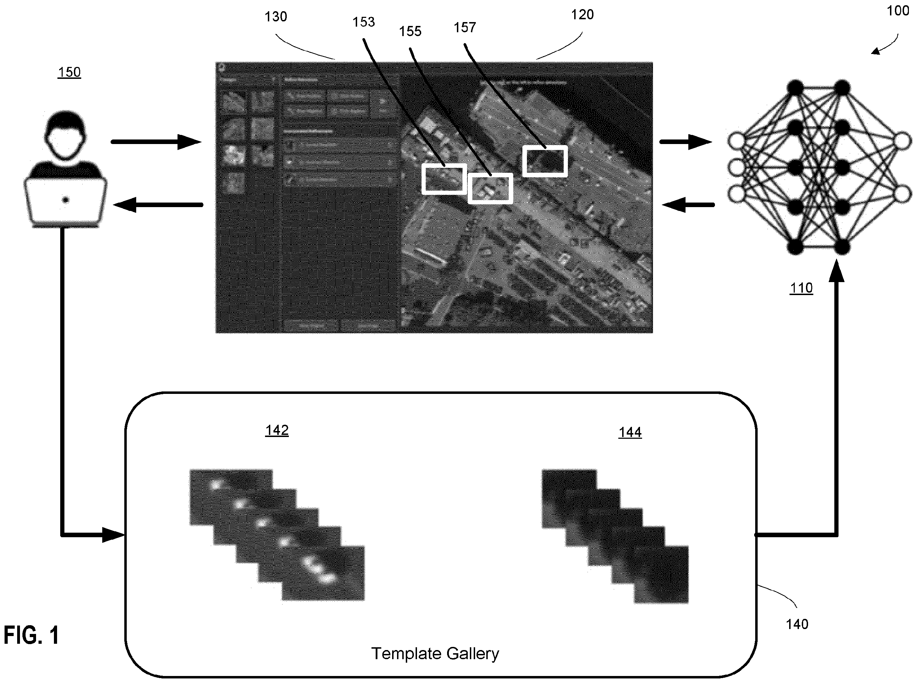

Figure 1 is an illustrative example of an object detection system or workflow 100, according to certain embodiments of the present disclosure. Figure 1 is merely an example. One of ordinary skill in the art would recognize many variations, alternatives, and modifications. According to some embodiments, the object detection system includes an image ingestion engine 120 (e.g., a software system), a user interface 130 that allows users 150 to interact with outputs of one or more models 110. In certain embodiments, the one or more models 110 take users input and improve its performance, for example, in real-time. In some examples, the one or more models 110 is integrated with or runs on an inference platform (e.g., a software platform orchestrates one or more models).

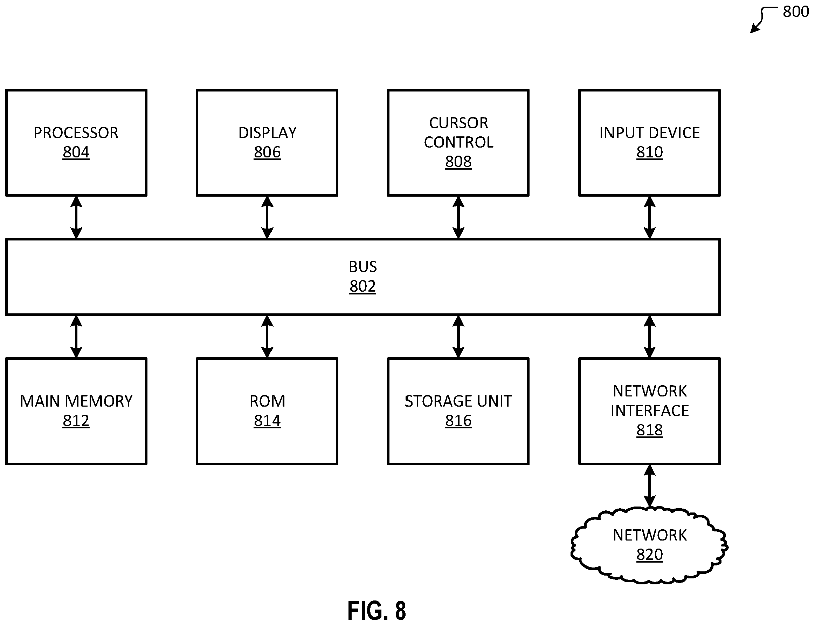

According to certain embodiments, the system 100 includes and supports one or more types of user interactions, for example, via the user interface 130. In some examples, the user interface 130 includes a graphical user interface (GUI), which can be displayed on a display of a computing device (e.g., display 806 of Figure 8). In some examples, there are three major types of user interactions in the user interface 130. In certain examples, a user 150 can draw a bounding box 153 around the object of interest and request the model to find similar looking ones in the image. In some embodiments, the image portion in the drawn bounding box 153 is considered as a positive template 142.

In certain embodiments, the user can click on an existing bounding box 155, also referred to as the clicked box 155, to confirm that it is a valid detection. In some embodiments, the image portion in the clicked box 155 is considered as a positive template 142. In certain embodiments, the user can click on an existing bounding box 157, also referred to as the clicked box 157, to request the model that it is not a valid detection. In some embodiments, the image portion in the clicked box 157 is considered as a negative template 144.

According to some embodiments, the object detection system 100 can perform object detections with user interactions on multiple images (e.g., a sequence of images for a video, a sequence of images). In certain embodiments, the user can identify one or more positive templates 142 and one or more negative templates 144, collectively templates 140, in the multiple images. In some embodiments, the one or more positive templates 142 and/or the one or more negative templates 144 are stored in a database, also referred to as a template gallery, that is a data repository for storing images and image metadata. In certain embodiments, the object detection system 100 can detect multiple types of objects and the users may be required to provide and/or choose labels (e.g., text labels) for each template 140 associated with the drawn/clicked bounding box. In some embodiments, the templates 140 and the corresponding labels are stored in the database.

According to certain embodiments, the drawn bounding box 153, the clicked box 155, and/or the clicked box 157 are associated with a respective image portion. In some embodiments, the object detection system can generate the image portion, for example, the image portion in the drawn bounding box 153, the image portion in the clicked box 155 or 157.

In some embodiments, the users 150 can be prompted to provide feedback to the object detection system 100, such as to generate the positive templates 142 and/or the negative templates 144, to improve the object detection system 100. In some embodiments, the users 150 can be prompted to provide feedback at regular intervals. In some embodiments, the users 150 can be prompted to provide feedback at irregular intervals. In some embodiments, the users 150 can provide feedback without being prompted (e.g., between adjacent prompting instances, before a prompting instance has occurred, and/or after a prompting instance has occurred). In some embodiments, the object detection system 100 can improve the performance of the objection detections (e.g., recognizing the right object in an image, recognizing the right object boundary in an image, etc.) of the one or more models 110 and generate more accurate outputs, by using user inputs and/or the templates. In certain embodiments, the templates 140 can be used as training data for the one or more models 110 to improve the models 110.

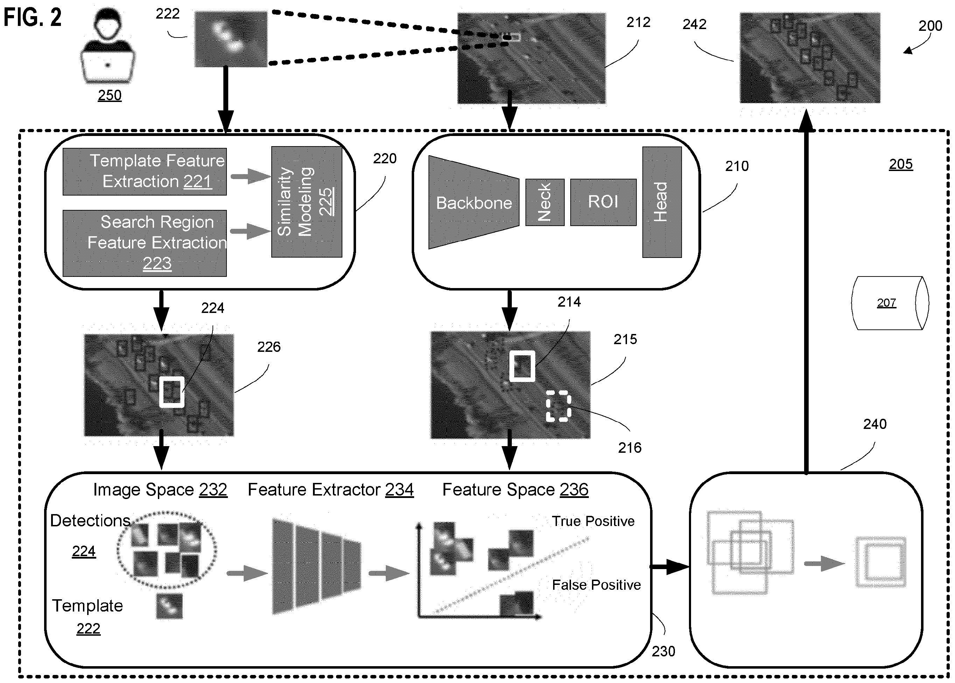

Figure 2 is an illustrative example of an object detection system or workflow 200, according to certain embodiments of the present disclosure. Figure 2 is merely an example. One of ordinary skill in the art would recognize many variations, alternatives, and modifications. According to certain embodiments, the object detection system 200 includes an object detector 210, also referred to as a software detector (e.g., an objection detection component, such as which includes a machine-learning model, a deep-learning model, and/or another trained model), a template matching component 220, a similarity learning component 230, and a filtering and fusion component 240. In some embodiments, the object detection system 200 includes an object detection engine 205 and one or more storage repositories 207. In certain embodiments, the object detection engine 205 includes the object detector 210, the template matching component 220, the similarity learning component 230, and the filter and fusion component 240. Although the above has been shown using a selected group of components in the object detection system 200, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the detector 210 (e.g., the object detector, the software detector) and the template matching component 220 can receive an input image 212. In some embodiments, the input image 212 is received from one or more image sensors (e.g., one or more still cameras, video cameras, and/or satellites). In certain embodiments, the template matching component 220 can take a user identified template 222 (e.g., by a drawn box or a clicked box) and perform template feature extraction 221, search region feature extraction 223, and/or similarity modeling 225. In certain embodiments, the template matching component 220 can build a similarity model for matching. In some embodiments, the template matching component 220 can locate similar looking objects 224 in one or more outputs 226.

According to certain embodiments, the similarity learning component 230 can compare the distance of user identified template 222 with the one or more outputs 215 of the detector 210 and the identified objects 224, for example, in the feature space 236. In some embodiments, the filtering and fusion component 240 can aggregate detection results as the model output 242. In certain embodiments, the process is iterative, for example, users 250 can continue interacting with the model output 242 until the results are generated.

In some embodiments, features of the one or more outputs 215 (e.g., pixel values, shapes, and/or vectors associated with the one or more outputs 215) may be compared to the identified objects 224, such as to determine whether the extracted features are similar to the identified objects 224. In some examples, a degree to which pixel values and/or shapes (e.g., features) of the outputs 215 are similar to pixel values and/or shapes (e.g., features) of the identified objects 224, corresponds to a similarity metric between the outputs 215 and the identified objects 224.

According to some embodiments, the detector 210 (e.g., a baseline detector) can generate object detections and predict one or more objects of interest. In certain embodiments, the detector 210 can predict as many objects of interest as possible. In some embodiments, the detector 210 includes one or more types (e.g., two types) of detectors based on the deployment scenarios. In certain embodiments, the object detection system 200 includes one or more pre-defined classes of objects with labeled data, for example, stored in the storage repository 230. In some embodiment, the detector 210 is trained on existing dataset. In certain embodiments, the detector 210 can apply a threshold to filter out low confidence detections 216. In some embodiments, the detector 210 keeps all detections, such as one or more high confidence detections 214 and one or more low confidence detections 216. In certain embodiments, the high confidence detection 214 is associated with a high confidence indicator (e.g., a solid-line box) that is different from a low confidence indicator (e.g., a dash-line box) for the low confidence detection 216. In certain embodiments, the system 200 uses (e.g., leverages) the similarity learning component 230 to filter out false detections.

According to some embodiments, for detecting in new domain and/or new classes, the object detection system 200 trains a class-agnostic detector 210 that can detect generic objects. In certain embodiments, to increase reusing templates (e.g., recall templates), the object detection system 200 can use (e.g., leverage) one or more intermediate results of the one or more detectors 210, for example, such as ROI (region of interest). In some embodiments, the performance of the detector 210 depends on training dataset which suffer the issues mentioned above.

According to certain embodiments, the template matching component 220 is configured to locate similar looking objects based on a user identified positive template 222 and/or a user identified negative template 222. In some embodiments, the template matching component 220 can complement the detector 210 by predicting similarity between template and search region. In certain embodiments, the template matching component 220 includes the template feature extraction 221, the search region feature extraction 223, and/or the similarity modeling 225. In some embodiments, the template feature extraction 221 and/or the search region feature extraction 223 may use either a single DNN network or separate DNN networks. In certain embodiments, the similarity modeling 225 may be a relationship learning module that can determine the similarity of template features and search region features.

In some embodiments, the similarity modeling 225 may use a loss function and a sampling strategy for training one or more machine-learning model, one or more ANNs or DNNs according to types of similarity, for example, instance-based similarity, categorybased similarity, attribute-based similarity, and/or the like. In certain examples, a loss function is used to calculate the efficacy of the machine-learning model (e.g., an ANN, a DL, a DNN, etc.) for each or at least a part of a plurality of epochs. In some embodiments, an epoch refers to one cycle through a training dataset and/or a validation dataset. In certain embodiments, the training dataset and/or the validation dataset includes, for example, images, image vectors, objects, object parameters, similarity metric, and/or the like. In some embodiments, the similarity modeling 225 can use the loss function to calculate the efficacy of the machine-learning model (e.g., a neural network). The similarity modeling 225 can check if the output of the machine-learning model using training dataset and/or validation dataset satisfies certain training criterion. In some embodiments, the training criterion is related to repeated failure to reduce loss on the validation subset. For example, the training criterion is when the training fails to improve the efficacy of the By a predetermined number of epochs. In some embodiments, the training criterion is related to the efficacy of the neural network equal to or higher than a predetermined threshold (e.g., 95%). If the training criterion is not met, the parameters and weights for the machine-learning model are updated, for example, using the predictions and loss values generated on the training dataset, and repeat the training process.

In certain embodiments, methods and/or architectures for template similarity matching may include one or more Siamese neural networks and/or one or more Siameselike neural networks (e.g., an ANN with two different input vectors to compute one or more output vectors) with cross correlation operation, discriminative correlation filter, and/or non-linear interaction. In some embodiments, the template matching component 220 includes one or more attention models and/or one or more transformer models.

According to some embodiments, the similarity learning component 230 is configured to filter out false positives from one or more detection outputs 216 of the detector 210 and one or more detection outputs 226 of the template matching component 220, for example, including user provided templates 222. In certain embodiments, the object detection system 200 and/or the similarity learning component 230 can train a feature extractor 234 based on the similarity identification (e.g., similarity definition), and use the feature extractor 234 to extract features and/or embeddings of both templates 222 and detection outputs 224 (e.g., region of interest). In some embodiments, the similarity learning component 230 may use a distance metric of the extracted features to represent the similarity between detections and templates. In certain embodiments, the similarity learning component 230 includes an image space 232, the feature extractor 234, and/or a feature space 236. In some embodiments, the feature space 236 includes one or more true positives and one or more false positives. In some embodiments, an image embedding, also referred to as an embedding, refers to a lower dimensional representation of an image, such as a vector representing the image.

According to certain embodiments, the filtering and fusion component 240 can receive the output of similarity learning component 230 and is configured to rescore object (e.g., one or more objects identified in bounding boxes) confidence from both the detector 210 and the template matching component 220.

According to some embodiments, the similarity learning component 230 includes a machine-learning model to determine a similarity metric (e.g., distance). In some embodiments, a rescoring function can include, for example:
For positive templates: T * (f(detection bounding box embedding, template 1 embedding) + f(detection bounding box embedding, template 2 embedding) + ... + f(detection bounding box embedding, template embedding))/N, where an embedding is an image portion extracted using similarity learning component and T is a predefined confidence threshold. In certain embodiments, f is a function for similarity metric determination, for example, a dot product or cosine similarity, or Euclidean distance, Manhattan distance, or Jaccard Similarity, and/or the like.
For negative templates: max (f(detection bounding box embedding, template 1 embedding), f(detection bounding box embedding, template 2 embedding),.... , f(detection bounding box embedding, template N embedding)), where f is a function, and can be a dot product or cosine similarity, or Euclidean distance, Manhattan distance, or Jaccard Similarity, and/or the like.

According to some embodiments, the one or more model outputs 242 (e.g., one or more results) may be further filtered and ensembled with heuristics-based approaches. In certain embodiments, the one or more outputs (e.g., one or more model outputs 242) are displayed to the users 250. In some embodiments, the object detection system 200 can improve the performance of the objection detections (e.g., recognizing the right object in an image, recognizing the right object boundary in an image, etc.) and generate more accurate outputs, by applying various components of the system 200 including receiving user inputs via the input images 212, the software detector 210, the template matching component 220, the similarity learning component 230, and/or the filtering and fusion component 240. In certain embodiments, the one or more model outputs 242 are used in further training one or more computing models, such as the machine-learning model for the similarity modeling, to improve the one or more computing models.

In some embodiments, the repository 207 can include one or more templates (e.g., positive templates, negative templates), one or more confidence levels, one or more input images, one or more model outputs, one or more regions of interest, one or more extracted features, one or more models, and/or the like. The repository 207 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In certain embodiments, various components in the object detection system 200 can interact with one another via a software interface. In some embodiments, a software interface includes an application programming interface (API), a web service interface, retrieving information from a file, retrieving information from a data repository, and/or the like. In some cases, various components in the object detection system 200 can execute software or firmware stored in non-transitory computer-readable medium to implement various processing steps. Various components and processors of the object detection system 200 can be implemented by one or more computing devices including, but not limited to, circuits, a computer, a cloud-based processing unit, a processor, a processing unit, a microprocessor, a mobile computing device, and/or a tablet computer. In some cases, various components of the object detection system 200 (e.g., the object detection engine 205, the detector 210, the template matching component 220, the similarity learning component 230, the filtering and fusion component 240, etc.) can be implemented on a shared computing device. Alternatively, a component of the object detection system 200 can be implemented on multiple computing devices. In some implementations, various modules and components of the object detection system 200 can be implemented as software, hardware, firmware, or a combination thereof. In some cases, various components of the object detection system 200 can be implemented in software or firmware executed by a computing device.

Various components of the object detection system 200 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

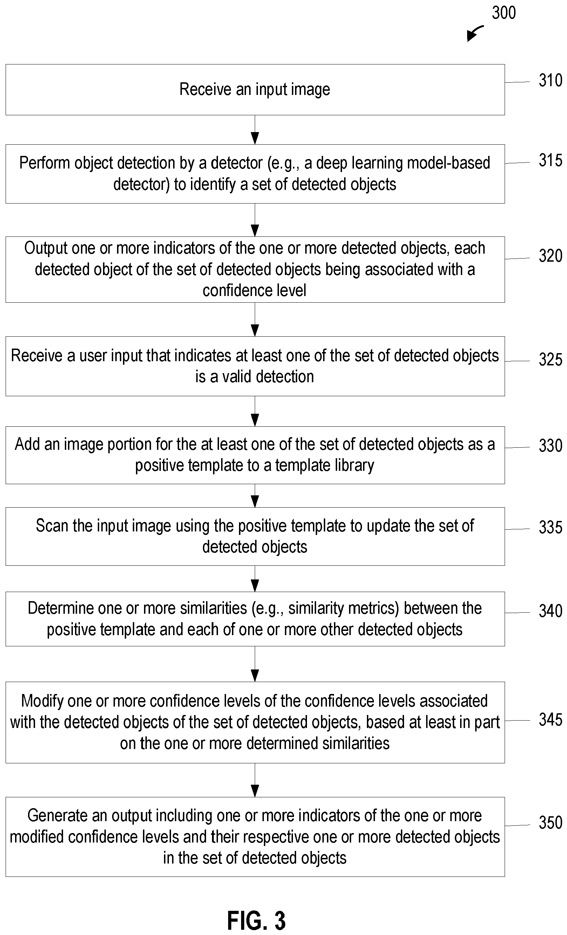

Figure 3 is a simplified diagram showing a method 300 for user-assisted object detections according to certain embodiments of the present disclosure. This diagram is merely an example. One of ordinary skill in the art would recognize many variations, alternatives, and modifications. The method 300 for user-assisted object detection includes processes 310, 315, 320, 325, 330, 335, 340, 345, and 350. Although the above has been shown using a selected group of processes for the method 300 for user-assisted object detection, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 300 are performed by a system (e.g., the computing system 800). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 310, the system receives an input image. In certain embodiments, the input image includes a still image, a plurality of images, a sequence of images, and/or a video. In some embodiments, the system receives one or more images in sequence. In some embodiments, the input image is received from one or more image sensors (e.g., one or more still cameras, video cameras, and/or satellites).

According to certain embodiments, at process 315, the system performs object detection to identify a set of detected objects, for example, via a software detector (e.g., the detector 210). In some embodiments, the detector includes a machine-learning model for object detection. In certain embodiments, the detector includes a deep-learning model for object detection.

According to some embodiments, at process 320, the system outputs one or more indicators of the set of detected objects, each detected object of the set of detected objects being associated with a confidence level. In certain embodiments, the indicator indicates an associated confidence level. In some embodiments, an indicator includes a first characteristic representing a high confidence level and a second characteristic representing a low confidence level. In certain embodiments, the indicator is in a closed shape (e.g., a rectangle, a circle, an oval, etc.). In some examples, an indicator is a closed shape with a solid line and/or a first weight for a detected object having a high confidence level. In certain examples, an indicator is a closed shape with a dashed line and/or a second weight for a detected object having a low confidence level. In some embodiments, the one or more indications include indications of at least a part of the set of detected objects each having a confidence level higher than a threshold. In certain embodiments, the threshold is a predetermined threshold. In some examples, a detected object with low confidence does not have an associated indicator, for example, the detected object not shown with an indicator.

According to certain embodiments, at process 325, the system receives a user input. In some embodiments, the user input indicates at least one of the one or more detected objects is a valid detection. In some embodiments, the system receives the user input via a graphical user interface, a user interface, and/or a software interface. In certain embodiments, a detected object is associated with an indication and an image portion, for example, an image portion in a closed shape. In some embodiments, the user input includes a click or a double-click to the indication for the at least one of the one or more detected objects. In certain embodiments, the user input is associated with an image portion for the at least one of the one or more detected objects. In some embodiments, a user is prompted to provide corrective input, such as to indicate at least one of the one or more detected objects is a valid detection. The system therefore may receive the provided corrective input that may indicate at least one of the one or more detected objects is a valid detection.

According to some embodiments, at process 330, the system adds the image portion as a positive template to a template library. Accordingly, in some embodiments, a valid detection may be associated with a positive template. In certain embodiments, the system performs template feature extraction and/or search region feature extraction. In some embodiments, the system is configured to extract one or more features from the positive template that are associated with the detected object.

According to certain embodiments, at process 335, the system scans the input image using the positive template to update the set of detected objects. In some embodiments, the system identifies one or more new objects that are not in the set of detected objects and update the set of detected objects to include the one or more new objects. In certain embodiments, the system identifies one or more new objects that are not in the set of detected objects using a similarity modeling (e.g., the similarity modeling 225). In certain embodiments, the system identifies the one or more new objects using the extracted features in the positive template.

According to some embodiments, at process 340, the system determines one or more similarities (e.g., similarity metrics) between the positive template and each of one or more other detected objects in the set of detected objects. In some embodiments, the system determines a similarity metric (e.g., a distance) between the positive template and a detected object. In certain embodiments, the system determines the similarity metric using a similarity machine-learning model, for example, a regression similarity learning model, a classification similarity learning model, a ranking similarity learning model, and/or the like. In some embodiments, the system determines the similarity metric between the positive template and a detected object using a Siamese neural network and/or the like. In certain embodiments, the system determines a similarity distance, which is an example of the similarity metric, between the positive template and a detected object.

According to certain embodiments, at process 345, the system modifies one or more confidence levels of the confidence levels associated with the detected objects of the set of detected objects, based at least in part on the one or more determined similarities. In some embodiments, a confidence level of a detected object is increased based on a high similarity (e.g., a similarity metric representing high similarity, short similarity distance) to the positive template. In certain embodiments, a confidence level of a detected object is decreased based on a low similarity (e.g., a similarity metric representing low similarity, long similarity distance) to the positive template. In some embodiments, one or more confidence levels corresponding to one or more objects in the set of detected objects remain unchanged. In some embodiments, the confidence threshold for indicators can be dynamically changed. In certain embodiments, the confidence threshold (e.g., 0.5) for a high confidence level can be adjusted based on the modified confidence levels.

According to some embodiments, at process 350, the system generates an output including one or more indicators of the one or more modified confidence levels and their respective one or more detected objects in the set of detected objects. In certain embodiments, the output includes at least a part, or all of the indicators associated with the updated set of detected objects. In some embodiments, the output includes indicators of detected objects with high confidence levels. In certain embodiments, the output includes first indicators of detected objects with high confidence levels and second indicators of detected objects with low confidence levels. In some embodiments, the system can improve the performance of the objection detections (e.g., recognizing the right object in an image, recognizing the right object boundary in an image, etc.) and generate more accurate outputs, by using the modified confidence levels and respective detected objects. In certain embodiments, the modified confidence levels and respective detected objects are used in further training one or more computing models, such as the similarity machine-learning model, to improve the one or more computing models.

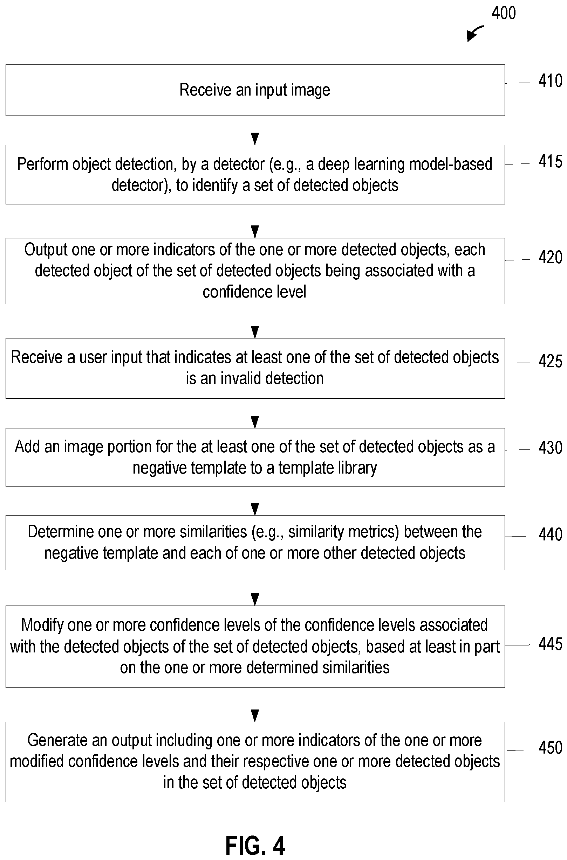

Figure 4 is a simplified diagram showing a method 400 for user-assisted object detections according to certain embodiments of the present disclosure. This diagram is merely an example. One of ordinary skill in the art would recognize many variations, alternatives, and modifications. The method 400 for user-assisted object detection includes processes 410, 415, 420, 425, 430, 440, 445, and 450. Although the above has been shown using a selected group of processes for the method 400 for user-assisted object detection, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 400 are performed by a system (e.g., the computing system 800). In certain examples, some or all processes (e.g., steps) of the method 400 are performed by a computer and/or a processor directed by a code. For example, a computer includes a server computer and/or a client computer (e.g., a personal computer). In some examples, some or all processes (e.g., steps) of the method 400 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 410, the system receives an input image. In certain embodiments, an image includes a still image, a plurality of images, a sequence of images, and/or a video. In some embodiments, the system receives one or more images in sequence. In some embodiments, the input image is received from one or more image sensors (e.g., one or more still cameras, video cameras, and/or satellites).

According to certain embodiments, at process 415, the system performs object detection to identify a set of detected objects, for example, via a software detector (e.g., the detector 210). In some embodiments, the detector includes a machine-learning model for object detection. In certain embodiments, the detector includes a deep-learning model for object detection.

According to some embodiments, at process 420, the system outputs one or more indicators of the set of detected objects, each detected object of the set of detected object associated with a confidence level. In certain embodiments, the indicator indicates an associated confidence level. In some embodiments, an indicator includes a first characteristic representing a high confidence level and a second characteristic representing a low confidence level. In certain embodiments, the indicator is in a closed shape (e.g., a rectangle, a circle, an oval, etc.). In some examples, an indicator is a closed shape with a solid line and/or a first weight for a detected object having a high confidence level. In certain examples, an indicator is a closed shape with a dashed line and/or a second weight for a detected object having a low confidence level. In some embodiments, the one or more indications include indications of at least a part of the set of detected objects each having a confidence level higher than a threshold. In certain embodiments, the threshold is a predetermined threshold. In some examples, a detected object with low confidence does not have an associated indicator, for example, the detected object not shown with an indicator.

According to certain embodiments, at process 425, the system receives a user input that indicates at least one of the one or more detected objects is an invalid detection. In some embodiments, the system receives the user input via a graphical user interface, a user interface, and/or a software interface. In certain embodiments, a detected object is associated with an indication and an image portion, for example, an image portion in a closed shape. In some embodiments, the user input includes a click or a double-click to the indication for the at least one of the one or more detected objects. In certain embodiments, the user input is associated with an image portion for the at least one of the one or more detected objects. In some embodiments, a user is prompted to provide corrective input, such as to indicate at least one of the one or more detected objects is an invalid detection. The system therefore may receive the provided corrective input that may indicate at least one of the one or more detected objects is an invalid detection.

According to some embodiments, at process 430, the system adds the image portion as a negative template to a template library. Accordingly, in some embodiments, an invalid detection may be associated with a negative template. In certain embodiments, the system performs template feature extraction and/or search region feature extraction. In some embodiments, the system is configured to extract one or more features from the negative template that are associated with the detected object.

According to some embodiments, at process 440, the system determines one or more similarities (e.g., similarity metrics) between the negative template and each of one or more other detected objects in the set of detected objects. In some embodiments, the system determines a similarity metric (e.g., a distance) between the negative template and a detected object. In certain embodiments, the system determines the similarity metric using a similarity machine-learning model, for example, a regression similarity learning model, a classification similarity learning model, a ranking similarity learning model, and/or the like. In some embodiments, the system determines the similarity metric between the negative template and a detected object using a Siamese neural network and/or the like. In certain embodiments, the system determines a similarity distance between the negative template and a detected object.

According to certain embodiments, at process 445, the system modifies one or more confidence levels of the confidence levels associated with the detected objects of the set of detected objects, based at least in part on the one or more determined similarities. In some embodiments, a confidence level of a detected object is increased based on a low similarity (e.g., a similarity metric representing low similarity, long similarity distance) to the negative template. In certain embodiments, a confidence level of a detected object is decreased based on a high similarity (e.g., a similarity metric representing high similarity, short similarity distance) to the negative template. In some embodiments, one or more confidence levels corresponding to one or more objects in the set of detected objects remain unchanged. In some embodiments, the confidence threshold for indicators can be dynamically changed. In certain embodiments, the confidence threshold (e.g., 0.5) for a high confidence level can be adjusted based on the modified confidence levels.

According to some embodiments, at process 450, the system generates an output including one or more indicators of the one or more modified confidence levels and their respective one or more detected objects in the set of detected objects. In certain embodiments, the output includes at least a part or all of the indicators associated with the updated set of detected objects. In some embodiments, the output includes indicators of detected objects with high confidence levels. In certain embodiments, the output includes first indicators of detected objects with high confidence levels and second indicators of detected objects with low confidence levels. In some embodiments, the system can improve the performance of the objection detections (e.g., recognizing the right object in an image, recognizing the right object boundary in an image, etc.) and generate more accurate outputs, by using the modified confidence levels and respective detected objects. In certain embodiments, the modified confidence levels and respective detected objects are used in further training one or more computing models, such as the similarity machine-learning model, to improve the one or more computing models.

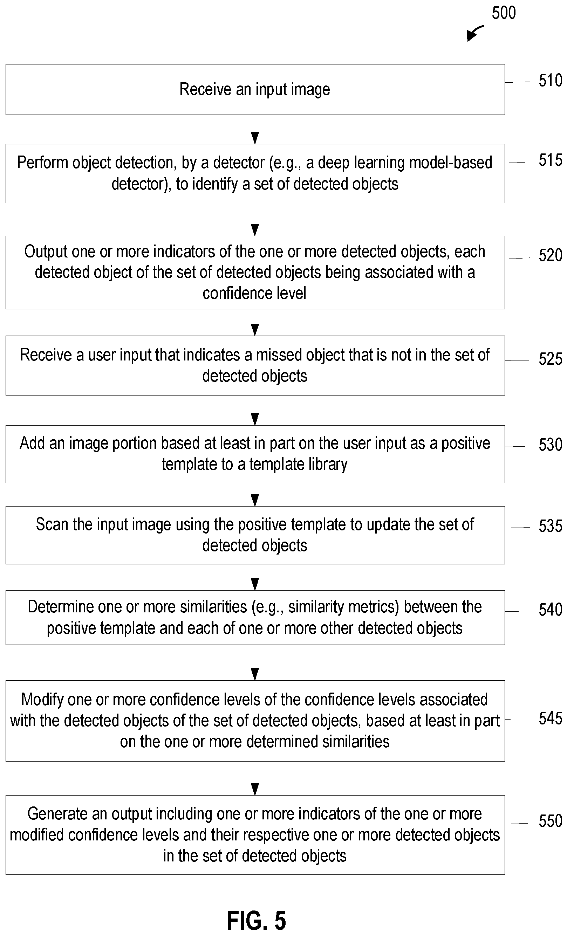

Figure 5 is a simplified diagram showing a method 500 for user-assisted object detections according to certain embodiments of the present disclosure. This diagram is merely an example. One of ordinary skill in the art would recognize many variations, alternatives, and modifications. The method 500 for user-assisted object detection includes processes 510, 515, 520, 525, 530, 535, 540, 545, and 550. Although the above has been shown using a selected group of processes for the method 500 for user-assisted object detection, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 500 are performed by a system (e.g., the computing system 800). In certain examples, some or all processes (e.g., steps) of the method 500 are performed by a computer and/or a processor directed by a code. For example, a computer includes a server computer and/or a client computer (e.g., a personal computer). In some examples, some or all processes (e.g., steps) of the method 500 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 510, the system receives an input image. In certain embodiments, an image includes a still image, a plurality of images, a sequence of images, and/or a video. In some embodiments, the system receives one or more images in sequence. In some embodiments, the input image is received from one or more image sensors (e.g., one or more still cameras, video cameras, and/or satellites).

According to certain embodiments, at process 515, the system performs object detection to identify a set of detected objects, for example, via a software detector (e.g., the detector 210). In some embodiments, the detector includes a machine-learning model for object detection. In certain embodiments, the detector includes a deep-learning model for object detection.

According to some embodiments, at process 520, the system outputs one or more indicators of the set of detected objects, each detected object of the set of detected objects being associated with a confidence level. In certain embodiments, the indicator indicates an associated confidence level. In some embodiments, an indicator includes a first characteristic representing a high confidence level and a second characteristic representing a low confidence level. In certain embodiments, the indicator is in a closed shape (e.g., a rectangle, a circle, an oval, etc.). In some examples, an indicator is a closed shape with a solid line and/or a first weight for a detected object having a high confidence level. In certain examples, an indicator is a closed shape with a dashed line and/or a second weight for a detected object having a low confidence level. In some embodiments, the one or more indications include indications of at least a part of the set of detected objects each having a confidence level higher than a threshold. In certain embodiments, the threshold is a predetermined threshold. In some examples, a detected object with low confidence does not have an associated indicator, for example, the detected object not shown with an indicator.

According to certain embodiments, at process 525, the system receives a user input that indicates a missed object that is not in the set of detected objects. In some embodiments, the system receives the user input via a graphical user interface, a user interface, and/or a software interface. In certain embodiments, the user input includes a drawn closed shape (e.g., a drawn box) indicating the missed object. In some embodiments, the user input includes a user drawing a bounding box. In certain embodiments, the user input is associated with an image portion. In some embodiments, the image portion is within the closed shape. In some embodiments, a user is prompted to provide corrective input, such as to indicate a missed object that is not in the set of detected objects. The system therefore may receive the provided corrective input that may indicate at least one of the one or more detected objects is not in the set of detected objects.

According to some embodiments, at process 530, the system adds the image portion as a positive template to a template library. In certain embodiments, the system performs template feature extraction and/or search region feature extraction. In some embodiments, the system is configured to extract one or more features from the positive template.

According to certain embodiments, at process 535, the system scans the input image using the positive template to update the set of detected objects. In some embodiments, the system identifies one or more new objects that are not in the set of detected objects and update the set of detected objects to include the one or more new objects. In certain embodiments, the system identifies one or more new objects that are not in the set of detected objects using a similarity modeling (e.g., the similarity modeling 225). In certain embodiments, the system identifies the one or more new object using the extracted features in the positive template.

According to some embodiments, at process 540, the system determines one or more similarities (e.g., similarity metrics) between the positive template and each of one or more other detected objects in the set of detected objects. In some embodiments, the system determines a similarity metric (e.g., a distance) between the positive template and a detected object. In certain embodiments, the system determines the similarity metric using a similarity machine-learning model, for example, a regression similarity learning model, a classification similarity learning model, a ranking similarity learning model, and/or the like. In some embodiments, the system determines the similarity metric between the positive template and a detected object using a Siamese neural network and/or the like. In certain embodiments, the system determines a similarity distance between the positive template and a detected object.

According to certain embodiments, at process 545, the system modifies one or more confidence levels of the confidence levels associated with the detected objects of the set of detected objects, based at least in part on the one or more determined similarities. In some embodiments, a confidence level of a detected object is increased based on a high similarity (e.g., a similarity metric representing high similarity, short similarity distance) to the positive template. In certain embodiments, a confidence level of a detected object is decreased based on a low similarity (e.g., a similarity metric representing low similarity, long similarity distance) to the positive template. In some embodiments, one or more confidence levels corresponding to one or more objects in the set of detected objects remain unchanged. In some embodiments, the confidence threshold for indicators can be dynamically changed. In certain embodiments, the confidence threshold (e.g., 0.5) for a high confidence level can be adjusted based on the modified confidence levels.

According to some embodiments, at process 550, the system generates an output including one or more indicators of the one or more modified confidence levels and their respective one or more detected objects in the set of detected objects. In certain embodiments, the output includes at least a part, or all of the indicators associated with the updated set of detected objects. In some embodiments, the output includes indicators of detected objects with high confidence levels. In certain embodiments, the output includes first indicators of detected objects with high confidence levels and second indicators of detected objects with low confidence levels. In some embodiments, the system can improve the performance of the objection detections (e.g., recognizing the right object in an image, recognizing the right object boundary in an image, etc.) and generate more accurate outputs, by using the modified confidence levels and respective detected objects. In certain embodiments, the modified confidence levels and respective detected objects are used in further training one or more computing models, such as the similarity machine-learning model, to improve the one or more computing models.

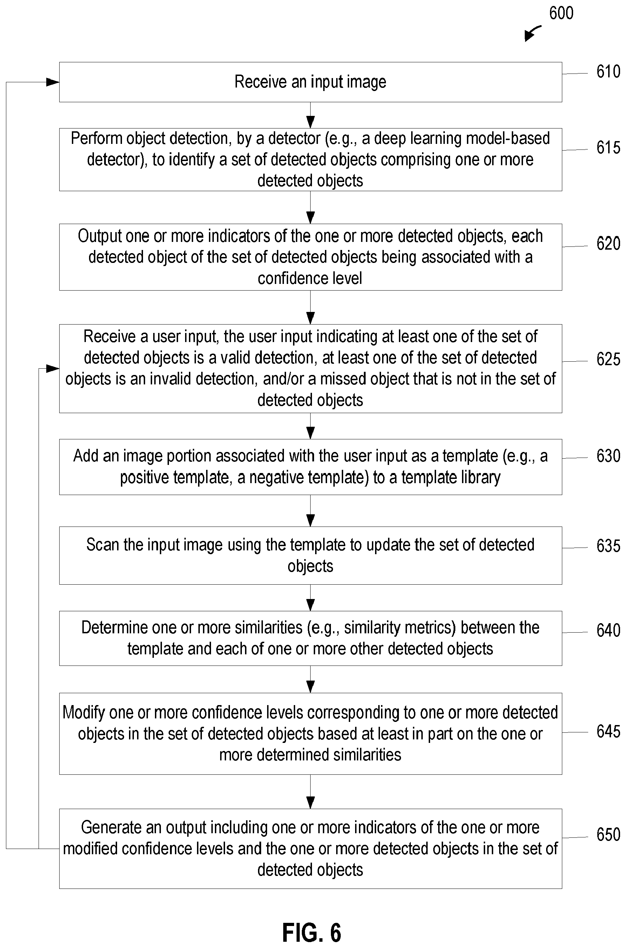

Figure 6 is a simplified diagram showing a method 600 for user-assisted object detections according to certain embodiments of the present disclosure. This diagram is merely an example. One of ordinary skill in the art would recognize many variations, alternatives, and modifications. The method 600 for user-assisted object detection includes processes 610, 615, 620, 625, 630, 635, 640, 645, and 650. Although the above has been shown using a selected group of processes for the method 600 for user-assisted object detection, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 600 are performed by a system (e.g., the computing system 800). In certain examples, some or all processes (e.g., steps) of the method 600 are performed by a computer and/or a processor directed by a code. For example, a computer includes a server computer and/or a client computer (e.g., a personal computer). In some examples, some or all processes (e.g., steps) of the method 600 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 610, the system receives an input image. In certain embodiments, an image includes a still image, a plurality of images, a sequence of images, and/or a video. In some embodiments, the system receives one or more images in sequence. In certain embodiments, an input image is one of the sequence of images. In some embodiments, the input image is received from one or more image sensors (e.g., one or more still cameras, video cameras, and/or satellites).

According to certain embodiments, at process 615, the system performs object detection to identify a set of detected objects, for example, via a software detector (e.g., a detector, the detector 210). In some embodiments, the detector includes a machine-learning model for object detection. In certain embodiments, the detector includes a deep-learning model for object detection.

According to some embodiments, at process 620, the system outputs one or more indicators of the set of detected objects, each detected object of the set of detected objects being associated with a confidence level. In certain embodiments, the indicator indicates an associated confidence level. In some embodiments, an indicator includes a first characteristic representing a high confidence level and a second characteristic representing a low confidence level. In certain embodiments, the indicator is in a closed shape (e.g., a rectangle, a circle, an oval, etc.). In some examples, an indicator is a closed shape with a solid line and/or a first weight for a detected object having a high confidence level. In certain examples, an indicator is a closed shape with a dashed line and/or a second weight for a detected object having a low confidence level. In some embodiments, the one or more indications include indications of at least a part of the set of detected objects each having a confidence level higher than a threshold. In certain embodiments, the threshold is a predetermined threshold. In some examples, a detected object with low confidence does not have an associated indicator, for example, the detected object not shown with an indicator.

According to certain embodiments, at process 625, the system receives a user input that indicates at least one of the one or more detected objects is a valid detection, at least one of the one or more detected objects is an invalid detection, and/or a missed object in the set of detected objects. In some embodiments, the system receives the user input via a graphical user interface, a user interface, and/or a software interface. In certain embodiments, a detected object is associated with an indication and an image portion, for example, an image portion in a closed shape. In some embodiments, the user input includes a click or a double-click to the indication for the at least one of the one or more detected objects to indicate a valid detection or an invalid detection. In certain embodiments, the user input is associated with an image portion for the at least one of the one or more detected objects. In some embodiments, a user is prompted to provide corrective input, such as to indicate at least one of the one or more detected objects is a valid detection, at least one of the one or more detected objects is an invalid detection, and/or a missed object in the set of detected objects. The system therefore may receive the provided corrective input that may indicate that least one of the one or more detected objects is a valid detection, at least one of the one or more detected objects is an invalid detection, and/or a missed object in the set of detected objects.

In certain embodiments, the user input includes a drawn closed shape (e.g., a drawn box) identifying the missed object. In some embodiments, the user input includes a user drawing a bounding box. In certain embodiments, the user input is associated with an image portion. In some embodiments, the image portion is within the closed shape. In certain embodiments, the user input includes one or more annotations (e.g., text, semantic inputs) indicating a label applicable to the object. In some embodiments, the set of detected objects and/or the identified missed object are associated with one or more corresponding labels that can be used for object detection training, for example, training and/or improving the detector, training and/or improving a similarity modeling algorithm, and/or the like.

According to some embodiments, at process 630, the system adds the image portion as a template (e.g., a positive template, a negative template) to a template library. In certain embodiments, the object as the valid detection and/or the missed object are added as the positive template. In some embodiments, the object as the invalid detection is added as the negative template. In certain embodiments, the system performs template feature extraction and/or search region feature extraction. In some embodiments, the system is configured to extract one or more features from the positive template that are associated with the detected obj ect.

According to certain embodiments, at process 635, optionally, the system scans the input image using the positive template to update the set of detected objects. In some embodiments, the system identifies one or more new objects that are not in the set of detected objects and updates the set of detected objects to include the one or more new objects. In certain embodiments, the system identifies one or more new objects that are not in the set of detected objects using similarity modeling (e.g., the similarity modeling 225). In certain embodiments, the system identifies the one or more new objects using the extracted features in the positive template.

According to some embodiments, at process 640, the system determines one or more similarities (e.g., similarity metrics) between the template (e.g., the positive template, the negative template) and each of one or more other detected objects in the set of detected objects. In some embodiments, the system determines a similarity metric (e.g., a distance) between the template and a detected object. In certain embodiments, the system determines the similarity metric using a similarity machine-learning model, for example, a regression similarity learning model, a classification similarity learning model, a ranking similarity learning model, and/or the like. In some embodiments, the system determines the similarity metric between the positive template and a detected object using a Siamese neural network and/or the like. In certain embodiments, the system determines a similarity distance between the positive template and a detected object.

According to certain embodiments, at process 645, the system modifies one or more confidence levels corresponding to one or more detected objects of the set of detected objects based at least in part on the one or more determined similarities. In some embodiments, a confidence level of a detected object is increased based on a high similarity (e.g., a similarity metric representing high similarity, short similarity distance) to the positive template. In certain embodiments, a confidence level of a detected object is decreased based on a low similarity (e.g., a similarity metric representing low similarity, long similarity distance) to the positive template.

In some embodiments, a confidence level of a detected object is increased based on a low similarity (e.g., a similarity metric representing low similarity, long similarity distance) to the negative template. In certain embodiments, a confidence level of a detected object is decreased based on a high similarity (e.g., a similarity metric representing high similarity, short similarity distance) to the negative template. In some embodiments, one or more confidence levels corresponding to one or more objects in the set of detected objects remain unchanged. In some embodiments, the confidence threshold for indicators can be dynamically changed. In certain embodiments, the confidence threshold (e.g., 0.5) for a high confidence level can be adjusted based on the modified confidence levels.

According to some embodiments, at process 650, the system generates an output including one or more indicators of the one or more modified confidence levels and the one or more detected objects in the set of detected objects. In certain embodiments, the output includes at least a part, or all of the indicators associated with the updated set of detected objects. In some embodiments, the output includes indicators of detected objects with high confidence levels. In certain embodiments, the output includes first indicators of detected objects with high confidence levels and second indicators of detected objects with low confidence levels. In some embodiments, the system can improve the performance of the objection detections (e.g., recognizing the right object in an image, recognizing the right object boundary in an image, etc.) and generate more accurate outputs, by using the modified confidence levels and respective detected objects. In certain embodiments, the modified confidence levels and respective detected objects are used in further training one or more computing models, such as the similarity machine-learning model, to improve the one or more computing models.

According to certain embodiments, the system goes back to process 625 to receive additional user inputs on the input image to generate updated indicators. In some embodiments, the system goes back to process 610 to process another input image, for example, a subsequent input image, a subsequent input image in a sequence of input images.

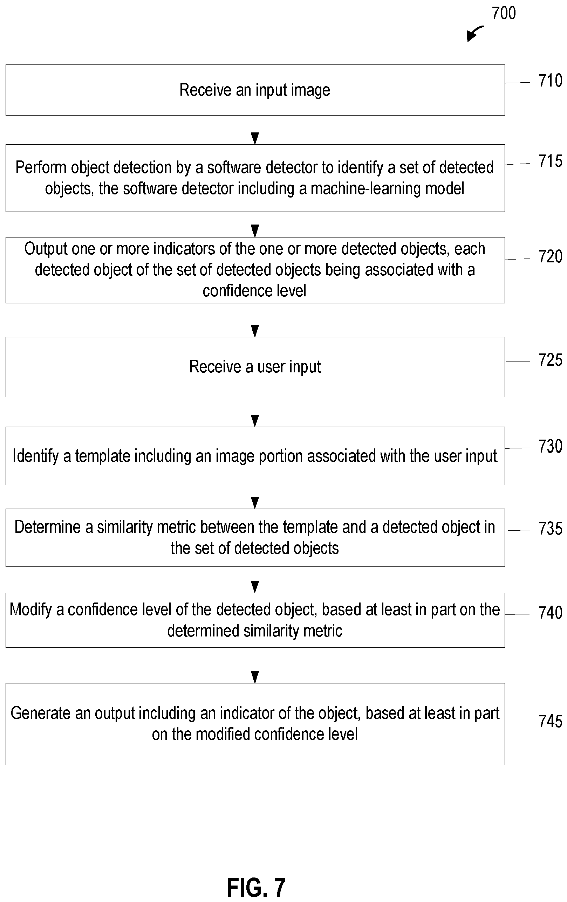

Figure 7 is a simplified diagram showing a method 700 for user-assisted object detections according to certain embodiments of the present disclosure. This diagram is merely an example. One of ordinary skill in the art would recognize many variations, alternatives, and modifications. The method 700 for user-assisted object detection includes processes 710, 715, 720, 725, 730, 735, 740, and 745. Although the above has been shown using a selected group of processes for the method 700 for user-assisted object detection, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 700 are performed by a system (e.g., the computing system 800). In certain examples, some or all processes (e.g., steps) of the method 700 are performed by a computer and/or a processor directed by a code. For example, a computer includes a server computer and/or a client computer (e.g., a personal computer). In some examples, some or all processes (e.g., steps) of the method 700 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 710, the system receives an input image. In certain embodiments, the input image includes a still image, a plurality of images, a sequence of images, and/or a video. In some embodiments, the system receives one or more images in sequence. In some embodiments, the input image is received from one or more image sensors (e.g., one or more still cameras, video cameras, and/or satellites).

According to certain embodiments, at process 715, the system performs object detection by a software detector (e.g., the detector 210) to identify a set of detected objects. In some embodiments, the software detector includes a machine-learning model for object detection. In certain embodiments, the software detector includes a deep-learning model for object detection.

According to some embodiments, at process 720, the system outputs one or more indicators of the set of detected objects, each detected object of the set of detected objects being associated with a confidence level. In certain embodiments, the indicator indicates an associated confidence level. In some embodiments, an indicator includes a first characteristic representing a high confidence level and a second characteristic representing a low confidence level. In certain embodiments, the indicator is in a closed shape (e.g., a rectangle, a circle, an oval, etc.). In some examples, an indicator is a closed shape with a solid line and/or a first weight for a detected object having a high confidence level. In certain examples, an indicator is a closed shape with a dashed line and/or a second weight for a detected object having a low confidence level. In some embodiments, the one or more indications include indications of at least a part of the set of detected objects each having a confidence level higher than a threshold. In certain embodiments, the threshold is a predetermined threshold. In some examples, a detected object with low confidence does not have an associated indicator, for example, the detected object not shown with an indicator.

According to certain embodiments, at process 725, the system receives a user input. In some embodiments, the user input indicates at least one of the one or more detected objects is a valid detection (e.g., as discussed above with respect to method 300). In some embodiments, the user input indicates at least one of the set of detected objects is an invalid object (e.g., as discussed above with respect to method 400). In some embodiments, the user input indicates a missed object that is not in the set of detected objects (e.g., as discussed above with respect to method 500). In some embodiments, a user is prompted to provide corrective input, such as to indicate at least one of the one or more detected objects is a valid detection, at least one of the one or more detected objects is an invalid detection, and/or a missed object in the set of detected objects.

In some embodiments, the system receives the user input via a graphical user interface, a user interface, and/or a software interface. In certain embodiments, a detected object is associated with an indication and an image portion, for example, an image portion in a closed shape. In some embodiments, the user input includes a click or a double-click to the indication for the at least one of the one or more detected objects. In certain embodiments, the user input is associated with an image portion for the at least one of the one or more detected objects. In certain embodiments, the user input includes a drawn closed shape (e.g., a drawn box) indicating the missed object. In some embodiments, the user input includes a user drawing a bounding box. In certain embodiments, the user input is associated with an image portion. In some embodiments, the image portion is within the closed shape.

According to some embodiments, at process 730, the system identifies a template that includes an image portion associated with the user input. In some examples, the identified template is the same or similar as template 140 and/or template 222 described earlier herein with respect to Figures 1 and 2, respectively. In some examples, the template is a positive template (e.g., positive template 142 of Figure 1). In some examples, the template is a negative template (e.g., negative template 144 of Figure 1).

According to some embodiments, at process 735, the system determines one or more similarity metrics between the template and a detected object in the set of detected objects. In some embodiments, the system determines a similarity metric (e.g., a distance) between the template and a detected object. In certain embodiments, the system determines the similarity metric using a similarity machine-learning model, for example, a regression similarity learning model, a classification similarity learning model, a ranking similarity learning model, and/or the like. In some embodiments, the system determines the similarity metric between the template and a detected object using a Siamese neural network and/or the like. In certain embodiments, the system determines a similarity distance between the template and a detected object.

According to certain embodiments, at process 740, the system modifies a confidence level of the detected object, based at least in part on the one or more determined similarities. In some embodiments, a confidence level of a detected object is increased based on a high similarity (e.g., a similarity metric representing high similarity, short similarity distance) to the template. In certain embodiments, a confidence level of a detected object is decreased based on a low similarity (e.g., a similarity metric representing low similarity, long similarity distance) to the template. In some embodiments, one or more confidence levels corresponding to one or more objects in the set of detected objects remain unchanged. In some embodiments, the confidence threshold for indicators can be dynamically changed. In certain embodiments, the confidence threshold (e.g., 0.5) for a high confidence level can be adjusted based on the modified confidence levels.

According to some embodiments, at process 745, the system generates an output including an indicator of the object, based at least in part on the modified confidence level. In certain embodiments, the output includes at least a part, or all of the indicators associated with the updated set of detected objects. In some embodiments, the output includes indicators of detected objects with high confidence levels. In certain embodiments, the output includes first indicators of detected objects with high confidence levels and second indicators of detected objects with low confidence levels. In some embodiments, the system can improve the performance of the objection detections (e.g., recognizing the right object in an image, recognizing the right object boundary in an image, etc.) and generate more accurate outputs, by using the modified confidence levels and respective objects. In certain embodiments, the modified confidence levels and respective objects are used in further training one or more computing models, such as the similarity machine-learning model, to improve the one or more computing models.

Figure 8 is a simplified diagram showing a computing system for implementing a system 800 for user-assisted object detection in accordance with at least one example set forth in the disclosure. This diagram is merely an example, which should not unduly limit the scope of the claims. One of ordinary skill in the art would recognize many variations, alternatives, and modifications.

The computing system 800 includes a bus 802 or other communication mechanism for communicating information, a processor 804, a display 806, a cursor control component 808, an input device 810, a main memory 812, a read only memory (ROM) 814, a storage unit 816, and a network interface 818. In some embodiments, some or all processes (e.g., steps) of the methods 300, 400, 500, 600, and/or 700 are performed by the computing system 800. In some examples, the bus 802 is coupled to the processor 804, the display 806, the cursor control component 808, the input device 810, the main memory 812, the read only memory (ROM) 814, the storage unit 816, and/or the network interface 818. In certain examples, the network interface is coupled to a network 820. For example, the processor 804 includes one or more general purpose microprocessors. In some examples, the main memory 812 (e.g., random access memory (RAM), cache and/or other dynamic storage devices) is configured to store information and instructions to be executed by the processor 804. In certain examples, the main memory 812 is configured to store temporary variables or other intermediate information during execution of instructions to be executed by processor 804. For examples, the instructions, when stored in the storage unit 816 accessible to processor 804, render the computing system 800 into a special-purpose machine that is customized to perform the operations specified in the instructions. In some examples, the ROM 814 is configured to store static information and instructions for the processor 804. In certain examples, the storage unit 816 (e.g., a magnetic disk, optical disk, or flash drive) is configured to store information and instructions.

In some embodiments, the display 806 (e.g., a cathode ray tube (CRT), an LCD display, or a touch screen) is configured to display information to a user of the computing system 800. In some examples, the input device 810 (e.g., alphanumeric and other keys) is configured to communicate information and commands to the processor 804. For example, the cursor control component 808 (e.g., a mouse, a trackball, or cursor direction keys) is configured to communicate additional information and commands (e.g., to control cursor movements on the display 806) to the processor 804.

According to certain embodiments, a method for user-assisted object detection is provided. The method includes: receiving an input image; performing object detection by a software detector to identify a set of detected objects, the software detector including a machine-learning model; outputting one or more indicators of the set of detected objects, each detected object in the set of detected objects being associated with a confidence level; receiving a user input; identifying a template including an image portion associated with the user input; determining a similarity metric between the template and a detected object in the set of detected objects; modifying a confidence level of the detected object, based at least in part on the determined similarity metric; and generating an output including an indicator of the object, based at least in part on the modified confidence level, wherein the method is performed using one or more processors. For example, the method is implemented according to at least Figure 1, Figure 2, Figure 3, Figure 4, Figure 5, Figure 6, and/or Figure 7.

In some embodiments, the determining a similarity metric comprises determining the similarity metric using a similarity machine-learning model. In certain embodiments, the determining a similarity metric comprises determining a similarity distance between the template and the image portion associated with the user input. In some embodiments, the user input includes an indication of a missed object that is not in the set of detected objects; wherein the method further comprises adding the missed object to the set of detected objects. In certain embodiments, the user input includes a boundary drawn by a user; the image portion is an image portion within the boundary; and the template is designated as a positive template.

In some embodiments, the user input includes an indication of one object in the set of detected objects being a valid detection; and the template is designated as a positive template. In certain embodiments, the user input includes an indication of one object in the set of detected objects being an invalid detection; and the template is designated as a negative template. In some embodiments, the method further comprises adding the template to a template library. In certain embodiments, the modifying a confidence level of the object comprises: identifying a new object that is not in the set of detected objects; adding the new object to the set of detected objects; and determining the confidence level associated with the new object based at least in part on the template. In some embodiments, the image is a first image in a sequence of images; the template is a first template; and the method further comprises predicting a second template for a second image subsequent to the first image based at least in part on the first template.

According to certain embodiments, a system for user-assisted object detection is provided. The system includes at least one processor and at least one memory storing instructions that, when executed by the at least one processor, causes the system to perform a set of operations. The set of operations includes: receiving an input image; performing object detection by a software detector to identify a set of detected objects, the software detector including a machine-learning model; outputting one or more indicators of the set of detected objects, each detected object in the set of detected objects being associated with a confidence level; receiving a user input; identifying a template including an image portion associated with the user input; determining a similarity metric between the template and a detected object in the set of detected objects; modifying a confidence level of the detected object, based at least in part on the determined similarity metric; and generating an output including an indicator of the object, based at least in part on the modified confidence level. For example, the system is implemented according to at least Figure 1, Figure 2, Figure 3, Figure 4, Figure 5, Figure 6, and/or Figure 7.

In some embodiments, the determining a similarity metric comprises determining the similarity metric using a similarity machine-learning model. In certain embodiments, the determining a similarity metric comprises determining a similarity distance between the template and the image portion associated with the user input. In some embodiments, the user input includes an indication of a missed object that is not in the set of detected objects; wherein the method further comprises adding the missed object to the set of detected objects. In certain embodiments, the user input includes a boundary drawn by a user; the image portion is an image portion within the boundary; and the template is designated as a positive template.

In some embodiments, the user input includes an indication of one object in the set of detected objects being a valid detection; and the template is designated as a positive template. In certain embodiments, the user input includes an indication of one object in the set of detected objects being an invalid detection; and the template is designated as a negative template. In some embodiments, the set of operations further comprises adding the template to a template library. In certain embodiments, the modifying a confidence level of the object comprises: identifying a new object that is not in the set of detected objects; adding the new object to the set of detected objects; and determining the confidence level associated with the new object based at least in part on the template. In some embodiments, the image is a first image in a sequence of images; the template is a first template; and the system of operations further comprises predicting a second template for a second image subsequent to the first image based at least in part on the first template.

According to certain embodiments, a method for user-assisted object detection is provided. The method includes: receiving an input image; performing object detection, by a detector, to identify a set of detected objects comprising one or more detected objects; outputting one or more indicators of the one or more detected objects, each detected object of the set of detected objects being associated with a confidence level; receiving a user input that indicates a missed object that is not in the set of detected objects; and adding an image portion associated with the user input as a template to a template library; scanning the input image, using the template, to update the set of detected objects; determining one or more similarities between the template and one or more detected objects of the updated set of detected objects; modifying one or more confidence levels of the confidence levels associated with the detected objects of the set of detected objects, based at least in part on the one or more determined similarities; and generating an output including one or more indicators of the one or more modified confidence levels and their respective one or more detected objects in the set of detected objects. For example, the system is implemented according to at least Figure 1, Figure 2, Figure 3, Figure 4, Figure 5, Figure 6, and/or Figure 7.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method (700) for user-assisted object detection, the method comprising:
receiving (710) an input image;
performing (715) object detection by a software detector to identify a set of detected objects, the software detector including a machine-learning model;
outputting (720) one or more indicators of the set of detected objects, each detected object in the set of detected objects being associated with a confidence level;
receiving (725) a user input;
identifying (730) a template including an image portion associated with the user input;
determining (735) a similarity metric between the template and a detected object in the set of detected objects;
modifying (740) a confidence level of the detected object, based at least in part on the determined similarity metric; and
generating (745) an output including an indicator of the object, based at least in part on the modified confidence level,
wherein the method is performed using one or more processors.

2. The method of claim 1, wherein the determining a similarity metric comprises determining the similarity metric using a similarity machine-learning model.

3. The method of claim 1 or claim 2, wherein the determining a similarity metric comprises determining a similarity distance between the template and the image portion associated with the user input.

4. The method of any preceding claim, wherein:
the user input includes an indication of a missed object that is not in the set of detected objects; and
the method further comprises adding the missed object to the set of detected objects.

5. The method of claim 4, wherein:
the user input includes a boundary drawn by a user;
the image portion is an image portion within the boundary; and
the template is designated as a positive template.

6. The method of any of claims 1 to 3, wherein:
the user input includes an indication of one object in the set of detected objects being a valid detection; and
the template is designated as a positive template.

7. The method of any of claims 1 to 3, wherein:
the user input includes an indication of one object in the set of detected objects being an invalid detection; and
the template is designated as a negative template.

8. The method of any preceding claim, further comprising adding the template to a template library.

9. The method of any preceding claim, wherein the modifying a confidence level of the object comprises:
identifying a new object that is not in the set of detected objects;
adding the new object to the set of detected objects; and
determining the confidence level associated with the new object based at least in part on the template.

10. The method of any preceding claim, wherein the image is a first image in a sequence of images, wherein the template is a first template, and wherein the method further comprises predicting a second template for a second image subsequent to the first image based at least in part on the first template.

11. A method (300) for user-assisted object detection, the method comprising:
receiving (310) an input image;
performing (315) object detection, by a detector, to identify a set of detected objects comprising one or more detected objects;
outputting (320) one or more indicators of the one or more detected objects, each detected object of the set of detected objects being associated with a confidence level;
receiving (325) a user input that indicates a missed object that is not in the set of detected objects; and
adding (330) an image portion associated with the user input as a template to a template library;
scanning (335) the input image, using the template, to update the set of detected objects;
determining (340) one or more similarities between the template and one or more detected objects of the updated set of detected objects;
modifying (345) one or more confidence levels of the confidence levels associated with the detected objects of the set of detected objects, based at least in part on the one or more determined similarities; and
generating (350) an output including one or more indicators of the one or more modified confidence levels and their respective one or more detected objects in the set of detected objects.

12. A system (800) for user-assisted object detection, the system comprising:
at least one processor (804); and
at least one memory (812) storing instructions that, when executed by the at least one processor, causes the system to perform a method in accordance with any preceding claim.
